# EUROPÄISCHE PATENTSCHRIFT

(11) **EP 3 968 817 B1**
(45) Veröffentlichungstag und Bekanntmachung des Hinweises auf die Patenterteilung: **19.04.2023**
(21) Anmeldenummer: 20706239.9
(22) Anmeldetag: 19.02.2020
(51) Int. Cl.: A47B 88/90, F16B 12/38, A47B 88/95

(54) **RÜCKWANDVERBINDER FÜR SCHUBKÄSTEN**
REAR WALL CONNECTOR FOR DRAWERS
RACCORD DE PAROI ARRIÈRE POUR TIROIRS

(30) Priorität: 17.05.2019 DE 102019113074; 12.09.2019 DE 102019124571
(43) Veröffentlichungstag der Anmeldung: 23.03.2022
(73) Patentinhaber: Paul Hettich GmbH & Co. KG, 32278 Kirchlengern (DE)
(72) Erfinder: KLAUS, Stefan, 32257 Bünde (DE); MERTES, Rolf, 32107 Bad Salzuflen (DE); STUFFEL, Andreas, 31675 Bückeburg (DE); MEYER, Bernd, 32469 Petershagen (DE); PRUTSCH, Andree, 49074 Osnabrück (DE); TOCKE, Matthias, 49082 Osnabrück (DE); WEIDLICH, Jürgen, 32289 Rödinghausen (DE); POPPENDIEK, Sebastian, 32257 Bünde (DE); SZLAPKA, Timo, 33739 Bielefeld (DE); KUHLMANN, Kirsten, 32278 Kirchlengern (DE)
(74) Vertreter: Dantz, Jan Henning
(86) Internationale Anmeldenummer: PCT/EP2020/054390
(87) Internationale Veröffentlichungsnummer: WO 2020/233843

(56) Entgegenhaltungen:
- EP-A1- 2 398 350
- EP-A1- 3 009 692
- WO-A1-2018/145999
- WO-A1-2018/146001

## Beschreibung

Die vorliegende Erfindung betrifft einen Rückwandverbinder für Schubkästen mit einem an einer Seitenzarge festlegbaren Träger und einem an dem Träger festgelegten Verbindungsteil, das Rastmittel, die an oder in einer Rastaufnahme an einer ersten Rückwand verrastbar sind, und ein Sicherungsteil aufweist, das mit dem Verbindungsteil linear verschiebbar verbunden ist und von einer hervorstehenden Position in eine die Rastmittel fixierende Sicherungsposition bewegbar ist, wobei an dem Verbindungsteil mindestens eine Anlagefläche für eine zweite Rückwand mit einem Schraubkanal ausgebildet ist.

Die DE 10 2017 102 643 A1 offenbart einen Schubkasten, bei dem an einem Verbindungselement unterschiedliche Rückwände montiert werden können. Das an der Seitenzarge fixierte Verbindungselement kann an einer Rückwand aus Metallblech verrastet werden, wobei die Rastposition dann über ein Sicherungselement gesichert wird, das die Rastmittel fixiert. Alternativ kann das Sicherungselement auch vor der Montage abgetrennt werden, um dann eine Rückwand aus einem Holzwerkstoff an dem Verbindungselement zu verschrauben. Dieses vielseitige Verbindungselement hat sich an sich bewährt, allerdings besteht das Problem, dass beim Abtrennen des Sicherungselements dieses entsorgt werden muss. Zudem ist die Ausrichtung der Rückwand an dem Verbindungselement mühsam.

WO2010/094532 offenbart eine Eckverbindung eines Schubkastens bei dem ein Verbinder von oben auf eine Rückwand aufsteckbar und über ein Halteelement gesichert werden kann.

Es ist daher Aufgabe der vorliegenden Erfindung, einen Rückwandverbinder für Schubkästen zu schaffen, der eine verbesserte Montage und Befestigung von unterschiedlichen Rückwänden ermöglicht.

Diese Aufgabe wird mit einem Rückwandverbinder mit den Merkmalen des Anspruches 1 gelöst.

Bei dem erfindungsgemäßen Rückwandverbinder ist ein Sicherungsteil linear verschiebbar in einem Verbindungsteil gelagert, wobei das Sicherungsteil von einer hervorstehenden Position beabstandet zu einer Anlagefläche des Verbindungsteils, in der ein erster Typ einer Rückwand festlegbar ist, in eine Sicherungsposition bewegbar ist, in der die Rastmittel fixiert werden. Soll ein anderer Typ einer Rückwand an dem Verbindungsteil fixiert werden, kann eine Fläche des Sicherungsteils in eine im Wesentlichen zur Ausbildung einer flächenbündigen Ebene mit einer Anlagefläche des Verbindungsteils angeordneten Position bewegt werden. Dadurch muss das Sicherungsteil nicht mehr entsorgt werden, sondern kann unabhängig von dem gewählten Typ der Rückwand bewegt werden, in der einerseits die Rastmittel gesichert werden und andererseits eine flächenbündige Ausrichtung mit der Anlagefläche gegeben ist, so dass eine Rückwand an der Anlagefläche und an einer benachbarten Fläche des Sicherungsteils ausgerichtet werden kann.

Vorzugsweise ist an dem Verbindungsteil und/oder dem Sicherungsteil mindestens ein in Richtung Rückwand hervorstehender Anschlag vorgesehen, an der eine Stirnseite einer plattenförmigen Rückwand anlegbar ist. Dieser Anschlag kann zur seitlichen Ausrichtung der Rückwand genutzt werden, deren Stirnseite gegen den Anschlag bewegt werden kann, um dann ein Befestigungsmittel, wie eine Schraube, durch die Rückwand in das Verbindungsteil in den Schraubkanal einzudrehen. Der Anschlag kann dabei stegförmig oder leistenförmig ausgebildet sein. Vorzugsweise ist der Anschlag integral mit dem Sicherungsteil ausgebildet und bildet mit der Anlagefläche an dem Verbindungsteil einen Winkel aus.

In einer weiteren Ausgestaltung ist das Sicherungsteil in der Sicherungsposition klemmend und/oder rastend gehalten. Das Sicherungsteil kann dabei von der hervorstehenden Position in die Sicherungsposition eingeschoben werden, wobei das Sicherungsteil an dem Verbindungsteil geführt ist und in einer vorbestimmten Sicherungsposition durch Klemmung und/oder Rastung gehalten ist. Zur Fixierung des Sicherungsteils kann integral mit diesem mindestens ein Rasthaken oder eine Rastaufnahme ausgebildet sein, die mit einer Rastaufnahme oder einem Rasthaken an dem Verbindungsteil zusammenwirkt, um das Sicherungsteil in einer definierten Position an dem Verbindungsteil festzulegen.

Zur stabilen Ausgestaltung des Rückwandverbinders kann das Verbindungsteil mit dem Träger vertaumelt, verpresst und/oder verprägt sein. Das Verbindungsteil ist vorzugweise aus Kunststoff hergestellt, insbesondere durch ein Spritzgussverfahren. Der Träger ist vorzugsweise aus einem gebogenen Metallblech hergestellt.

Ferner kann an dem Verbindungsteil mindestens ein Steckelement vorgesehen sein, wobei an dem mindestens einem Steckelement ein weiteres Sicherungsteil aufgesteckt ist. Dadurch kann das Verbindungsteil sowohl an rechten als auch an linken Seitenzargen d.h. sich gegenüberliegenden Zargen eines Schubkastens verwendet werden. Die beiden Steckelemente sind an gegenüberliegenden Seiten angeordnet, beispielsweise oben und unten am Verbindungselement, so dass wahlweise an dem oberen oder dem unteren Steckelement und bei entsprechend gespiegelter Anordnung an dem jeweils anderen Steckelement ein weiteres Sicherungsteil aufgesteckt werden kann.. Beispielsweise können an dem Verbindungsteil dann neben einer Rückwand auch Seitenwandteile oder Abdeckkappen an der Seitenzarge fixiert werden.

Zur verdrehsicheren Positionierung des Verbindungsteils an dem Träger, kann dieses einen oder mehrere integral ausgebildete Vorsprünge aufweisen, welche in eine Ausnehmung an dem Träger eingreift/en. Dadurch kann auf zusätzliche Befestigungsmittel verzichtet werden.

Der Rückwandverbinder wird vorzugsweise bei einem Schubkasten eingesetzt, der mindestens eine Seitenzarge aufweist, an der eine von oben montierbare Abdeckkappe aufgesteckt ist, die eine obere Kante der Rückwand übergreift. Über die Abdeckkappe kann die Verbindung zwischen Seitenzarge und Rückwand zusätzlich stabilisiert werden, und zudem kann die Verstellmechanik für ein ansprechendes äußeres Erscheinungsbild überdeckt werden. Die Abdecckappe ist vorzugsweise klemmend oder rastend an einem an dem Träger fixierten Kappenhalter fixiert, der beispielsweise als Rastvorsprung oder Raststeg ausgebildet ist. Hierfür kann der Kappenhalter einen Raststeg aufweisen, der über mindestens einen Haltesteg federnd elastisch gelagert ist und an dem die Abdeckkappe über einen Raststeg verrastet ist.

Die Erfindung wird nachfolgend anhand mehrerer Ausführungsbeispiele mit Bezug auf die beigefügten Zeichnungen näher erläutert. Es zeigen:

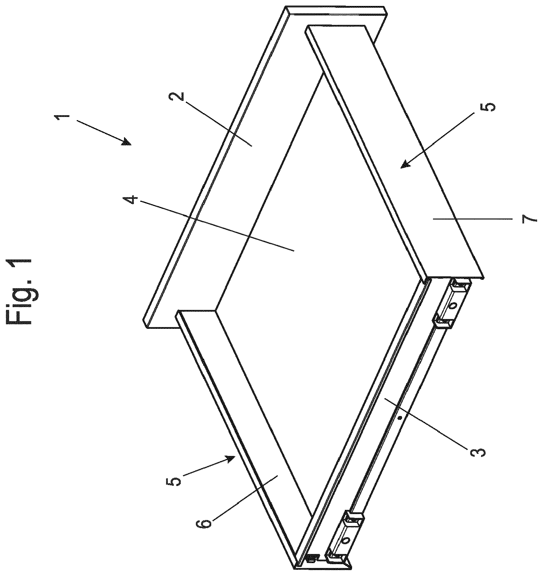

- Figur 1: eine perspektivische Ansicht eines erfindungsgemäßen Schubkastens;
- Figuren 2A bis 2C: mehrere Ansichten bei der Montage einer Rückwand aus einem Metallblech an einem erfindungsgemäßen Rückwandverbinder;
- Figuren 3A und 3B: zwei Ansichten bei der Montage einer plattenförmigen Rückwand an dem erfindungsgemäßen Rückwandverbinder;
- Figur 4: eine Rückansicht auf den Rückwandverbinder in der montierten Position;
- Figur 5: eine perspektivische Ansicht des Rückwandverbinders mit hervorstehendem Sicherungsteil;
- Figur 6: eine perspektivische Ansicht des Rückwandverbinders mit teilweise eingedrücktem Sicherungsteil;
- Figur 7: eine perspektivische Ansicht des Rückwandverbinders mit dem Sicherungssteil in der Sicherungsposition;
- Figur 8: eine Seitenansicht auf den Rückwandverbinder;
- Figur 9: eine Draufsicht auf den Rückwandverbinder;
- Figur 10: eine Detailansicht der Verrastung des Sicherungsteils;
- Figur 11: eine Ansicht eines modifizierten Rückwandverbinders;
- Figur 12: eine Ansicht eines weiteren Ausführungsbeispiels eines Schubkastens mit einer Abdeckkappe an dem Rückwandverbinder;
- Figuren 13A und 13B: zwei Detailansichten der Abdeckkappe der Figur 12;
- Figur 14: eine Detailansicht eines Raststeges der Abdeckkappe in der montierten Position;
- Figur 15: eine perspektivische Ansicht eines modifizierten Rückwandverbinders mit einem Kappenhalter;
- Figur 16: eine perspektivische Ansicht eines modifizierten Rückwandverbinders mit einem Kappenhalter;
- Figur 17: eine Detailansicht des Kappenhalters der Figur 16, und
- Figur 18: eine Detailansicht des Kappenhalters mit der Abdecckappe in der verrasteten Position.

Ein Schubkasten 1 umfasst eine Frontblende 2 und eine Rückwand 3, zwischen denen ein Boden 4 angeordnet ist. An gegenüberliegenden Seiten des Bodens 4 sind Seitenzargen 5 vorgesehen, die hohl ausgebildet sind und Mittel zur Verbindung mit der Frontblende 2 und mit der Rückwand 3 aufweisen. Jede Seitenzarge 5 umfasst dabei ein inneres Wandelement 6 und ein äußeres Wandelement 7. Im rückwärtigen Bereich ist an jeder der beiden Seitenzargen mindestens ein Rückwandverbinder vorgesehen, um die Rückwand 3 zu fixieren.

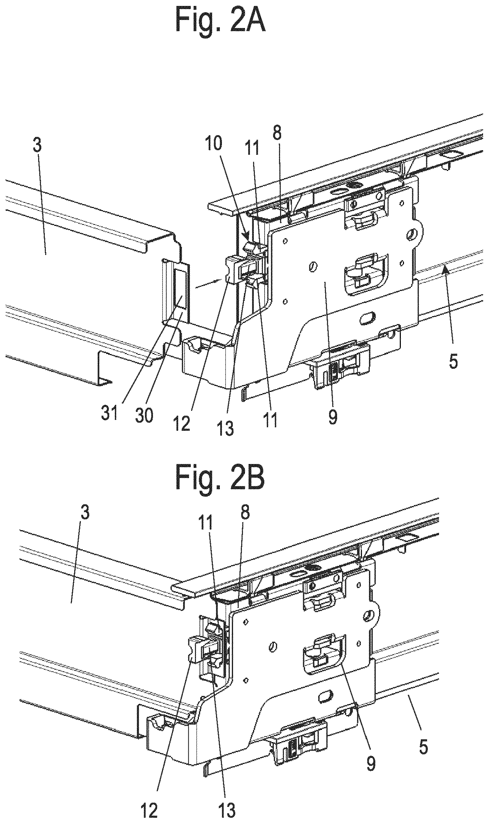

In Figur 2A ist der Schubkasten vor der Montage der Rückwand 3 gezeigt. Die Rückwand 3 besteht aus einem gebogenen Metallblech und weist seitliche eine hervorstehende Lasche 30 auf, an der eine im Wesentlichen rechteckförmige Aussparung 31 zur Verrastung an dem Rückwandverbinder vorgesehen ist.

Der Rückwandverbinder umfasst ein Verbindungsteil 10 das an einem Träger 8 in der Seitenzarge 5 angeordnet ist. An dem Träger 8 ist eine Abdeckung 9 vorgesehen, so dass nur ein Teil des Trägers 8 sichtbar ist.

Der Rückwandverbinder umfasst ein an dem Träger 8 festgelegtes Verbindungsteil 10 aus Kunststoff, an dem Rastmittel 11 in Form von zwei biegbaren Raststegen ausgebildet sind, die Rasthaken aufweisen, um die Lasche 30 an dem Verbindungsteil 10 verrasten zu können. Ferner steht rückseitig von dem Verbindungsteil 10 ein Sicherungsteil 12 hervor, das über einen Steg 13 in einem in dem Verbindungsteil ausgebildeten Führungskanal linear verschiebbar zum Verbindungsteil 10 gelagert ist. Der Führungskanal ist hierbei parallel beabstandet zu einem Schraubkanal 14 in dem Verbindungsteil 10 ausgebildet.

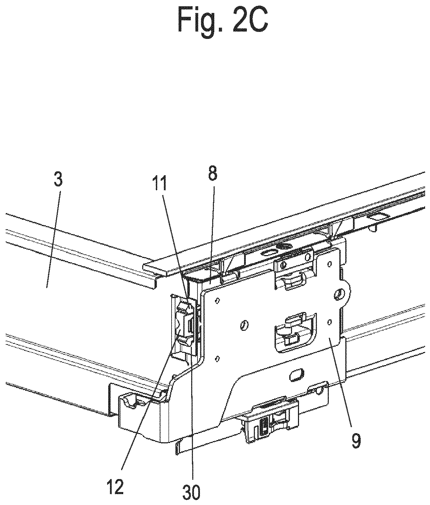

In Figur 2B wurde die Rückwand 3 mit der Lasche 30 auf die Rastmittel 11 aufgerastet, die nun die Aussparung 31 durchgreifen und mit einem hakenförmigen Abschnitt gegen ein Herausziehen sichern. Da die Raststege biegbar ausgebildet sind, sind die Haltekräfte für die Rückwand 3 noch gering. Zur endgültigen Fixierung der Rückwand 3 kann das Sicherungsteil 12 in das Verbindungsteil 10 eingeschoben werden, wie dies in der in Figur 2C gezeigten Position erfolgt ist. Das Sicherungsteil 12 steht nun nicht mehr rückseitig von der Rückwand hervor. Durch das Einschieben des Sicherungsteils 12 sind die Raststege fixiert, so dass die Rückwand 3 nicht mehr ohne Entfernen des Sicherungsteils 12 demontiert werden kann.

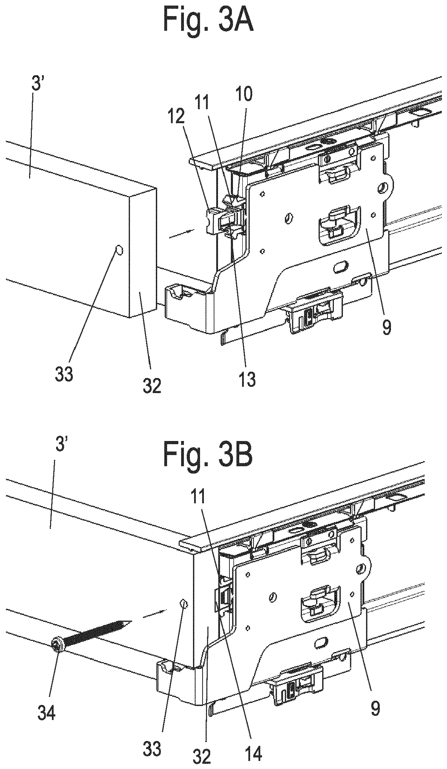

In Figur 3A ist die Montagesituation dargestellt, falls statt einer Rückwand 3 aus einem gebogenen Metallblech eine Rückwand 3' in Plattenform montiert werden soll, beispielsweise aus einem Holzwerkstoff oder aus einem Aluminiumprofil. Die Rückwand 3' umfasst benachbart zu einer Stirnseite 32 eine Öffnung 33, durch die ein Befestigungsmittel, insbesondere eine Schraube, durchgeführt werden kann. Zur Montage der Rückwand 3' wird an dem Rückwandverbinder das Sicherungsteil 12 in das Verbindungsteil 10 eingeschoben, bevor die Rückwand 3' montiert ist. In der eingeschobenen Position steht ein seitlicher Anschlag 14 von einer Anlagefläche 18 des Verbindungsteils 10 für die Anlage der Rückwand 3' von dem Sicherungsteil 12 hervor und kann zur seitlichen Ausrichtung der Rückwand 3' eingesetzt werden, indem die Stirnseite 32 gegen den Anschlag 14 bewegt wird. In dieser Position kann eine Schraube 34 durch die Öffnung 33 in das Verbindungsteil 10 zur Fixierung der Rückwand 3` an der Seitenzarge 5 eingedreht werden.

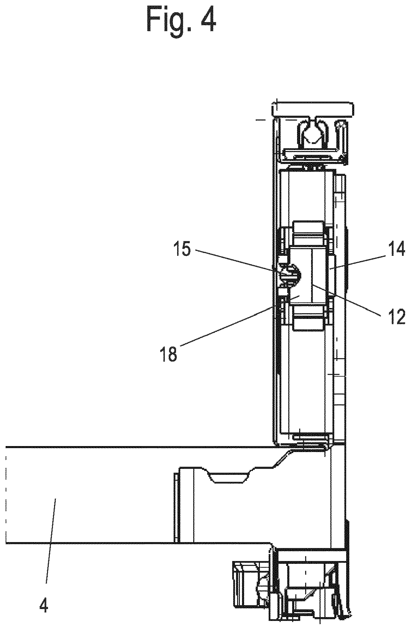

In Figur 4 ist der Rückwandverbinder vor der Montage der Rückwand 3' gezeigt. Es ist erkennbar, dass benachbart zu dem Anschlag 14 ein Schraubkanal 15 vorgesehen ist, in den die Schraube 34 eingedreht werden kann.

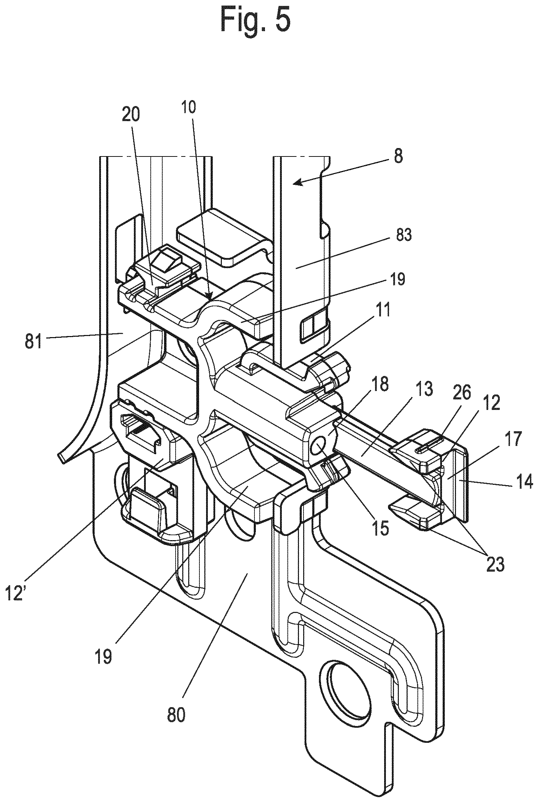

In Figur 5 ist der Rückwandverbinder mit dem Verbindungsteil 10 und dem Träger 8 im Detail gezeigt. Das Verbindungsteil 10 umfasst Rastmittel 11 in Form von zwei Raststegen, die ein Mittelteil des Verbindungsteils 10 umgeben, an dem eine Anlagefläche 18 ausgebildet ist, an die eine Rückwand 3 oder 3' anlegbar ist. In der Anlagefläche 18 ist ein Schraubkanal 15 vorgesehen, und neben der Anlagefläche ist der Steg 13 des Sicherungsteils 12 angeordnet, an dem mindestens ein Blockierelement 23, beispielsweise Keil, gehalten ist. Das Sicherungsteil 12 umfasst einen stegförmigen Anschlag 14, der im Wesentlichen senkrecht zur Anlagefläche 18 ausgerichtet ist und zur Ausrichtung einer plattenförmigen Rückwand 3' über dessen Stirnseite dient. Das mindestens eine Blockierelement 23, zum Fixieren der Rastmittel 11 kann in einer schlitzförmigen Aufnahme zwischen dem Rastmittel 11 und dem Mittelteil 16 des Verbindungsteils 10 eingeschoben werden.

Das Verbindungsteil 10 weist ferner zwei Arme 19 auf, die endseitig mit einem Vorsprung in mindestens einer Öffnung an einer umgebogenen Lasche 83 des Trägers 8 eingreifen. Der Träger 8 ist aus einem gebogenen Metallblech hergestellt und umfasst einen seitlichen Abschnitt 80, von dem eine erste Lasche 83 und eine zweite Lasche 81 umgebogen sind. Das Verbindungsteil 10 ist in einem mittleren Bereich 16 an dem seitlichen Abschnitt 80 des Trägers 8 fixiert, insbesondere durch eine Taumelverbindung, Steckverbindung, ein Verprägen und/oder ein Verpressen. Eine zusätzliche Fixierung an den umgebogenen Laschen 81 und 83 sorgt für eine verbesserte verdrehsichere Halterung des Verbindungsteils 10.

An dem Verbindungsteil 10 sind ein oberes Steckelement 20 und ein unteres Steckelement 21 vorgesehen, wobei an dem unteren Steckelement 21 ein Sicherungsteil 12' aufgesteckt ist. An dem Sicherungsteil 12' können weitere Bauteile, wie eine Abdeckkappe oder Seitenwand der Zarge, fixiert werden. Durch die symmetrische Anordnung der Steckelemente zum Mittelteil 16, kann das Verbindungsteil 10 sowohl an einer rechten als auch an einer linken Seite eingesetzt werden und muss lediglich gedreht werden, wobei in der gedrehten Position das Sicherungsteil 12' an dem Steckelement 20 fixiert werden kann, um ein weiteres Bauteil festzulegen. Die Steckelemente 20 und 21 sind an gegenüberliegenden Seiten des Verbindungsteils, nämlich an einer Ober- und einer Unterseite, angeordnet.

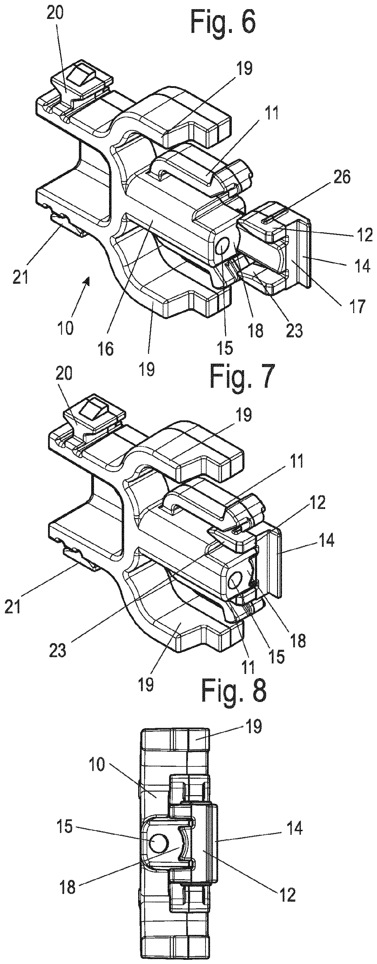

In Figur 6 ist das Verbindungsteil 10 ohne den Träger 8 dargestellt. Zudem ist das Sicherungsteil 10 schon teilweise in das Verbindungsteil 10 eingeschoben worden und steht nur noch geringfügig von der Anlagefläche 18 hervor. Das Sicherungsteil 12 umfasst Vorsprünge 26, die an den Rastmitteln 11 des Verbindungsteils 10 verrastbar sind.

In Figur 7 ist der Rückwandverbinder mit einem eingeschobenen Sicherungsteil 12 gezeigt, bei dem eine Fläche 17 des Sicherungsteils 12 flächenbündig mit der Anlagefläche 18 ausgerichtet ist. Von der Ebene der Fläche des Sicherungsteils 12 und der Anlagefläche 18 des Verbindungsteils 12 steht der stegförmige Anschlag 14 des Sicherungsteils 12 hervor. Das Sicherungsteil 12 selbst ist durch die keilförmigen Blockierelemente 23 klemmend und/oder rastend an den Rastmitteln 11 fixiert und gegen Herausziehen gesichert.

Wie der Figur 8 zu entnehmen ist, befindet sich das Sicherungsteil 12 seitlich neben der Anlagefläche 18 und dem Schraubkanal 15 des Verbindungsteils 10, so dass in einer Sicherungsposition des Sicherungsteils 12 die Anlagefläche 18 durch eine flächenbündige Anordnung einer benachbarten Fläche an dem Sicherungsteil 12 vergrößert werden kann, um eine Rückwand 3' anzulegen. Die Ausrichtung der Rückwand erfolgt dann über den seitlichen Anschlag 14.

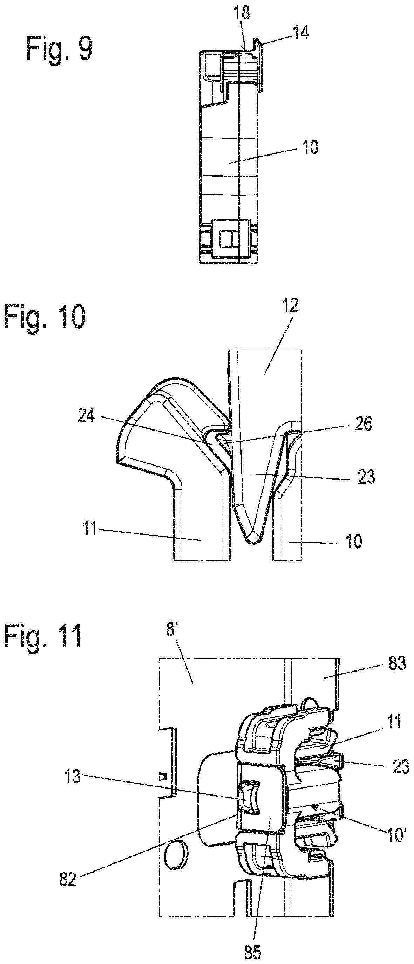

In Figur 9 ist gezeigt, dass der Anschlag 14 zusammen mit der Anlagefläche 18einen Winkel ausbildet.

In Figur 10 ist die Klemmung und/ oder Verrastung des Sicherungsteils 12 an dem Verbindungsteil 10 gezeigt. In der Sicherungsposition sind die Blockierelemente 23 in schlitzförmige Aufnahmen zwischen dem Rastmittel 11 und dem Mittelteil 16 des Verbindungsteils 10 angeordnet, wobei an dem Blockierelement 23 ein seitlicher Vorsprung 26 ausgebildet ist, der in einen Rastaufnahme 24 an dem Rastmittel 11 einfügbar ist. Der Vorsprung 26 greift in eine Rastaufnahme 24, und das Blockierelement 23 ist somit gegen ein Herausziehen gesichert. Dies erhöht die Sicherung der Rückwand 3 oder 3' gegen ein Abziehen.

In Figur 11 ist eine modifizierte Ausgestaltung eines Rückwandverbinders gezeigt, bei dem das Verbindungsteil 10 wie bei dem vorangegangenen Ausführungsbeispiel ausgebildet ist, bis auf die fehlende Anordnung von zwei Steckelementen 20 und 21, und eine Befestigung durch Vertaumeln mit dem Träger 8. Der Träger 8' aus einem Metallblech umfasst eine umgebogene Lasche 85, in der eine Ausnehmung ausgespart ist, in die der Steg 13 des Sicherungsteils 12 des Verbindungsteil 10' eingreift. Ferner ist an dem Träger 8' an der umgebogenen Lasche 83 eine Anlage bzw. Abstützung der Arme 19 vorgesehen, so dass auch durch die Laschen 83 und 85 das Verbindungsteil 10' verliersicher an dem Träger 8' gehalten ist.

Der erfindungsgemäße Rückwandverbinder kann zur Montage unterschiedlicher Rückwände 3, 3' aus einem gebogenen Stahlblech, Aluminium oder einem Holzwerkstoff eingesetzt werden. Es ist auch möglich, an dem Träger 8 statt einem Verbindungsteil 10 mehrere solcher Verbindungsteile 10 vorzusehen, insbesondere bei höheren Rückwänden.

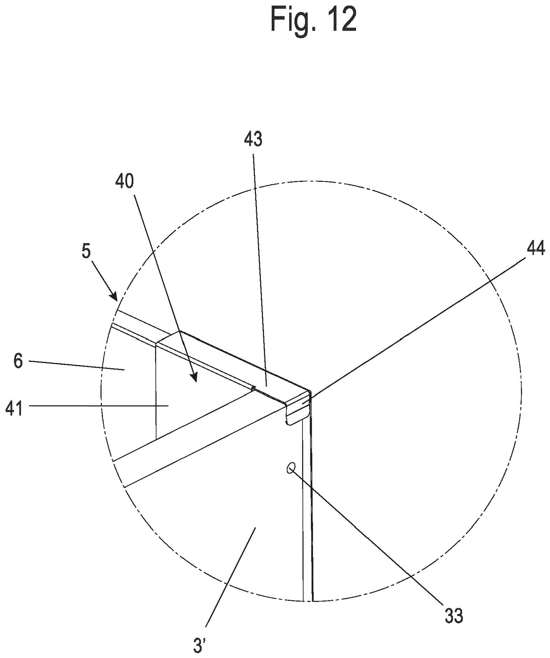

In Figur 12 ist ein Schubkasten mit einem modifizierten Rückwandverbinder gezeigt, der unter einer Abdeckkappe 40 angeordnet ist. An einer Seitenzarge 5 ist die Abdeckkappe 40 aufgesteckt und übergreift mit einem abgewinkelten Steg 44 die Rückwand 3', in der eine Öffnung 33 zur Fixierung an dem Träger ausgebildet ist. Statt der Rückwand 3' in Plattenform kann der abgewinkelte Steg 44 eine Rückwand 3 aus einem gebogenen Metallblech übergreifen.

Durch die Abdeckkappe 40 wird der Verbindungsbereich zwischen Seitenzarge 5 und Rückwand 3 oder 3' zusätzlich stabilisiert.

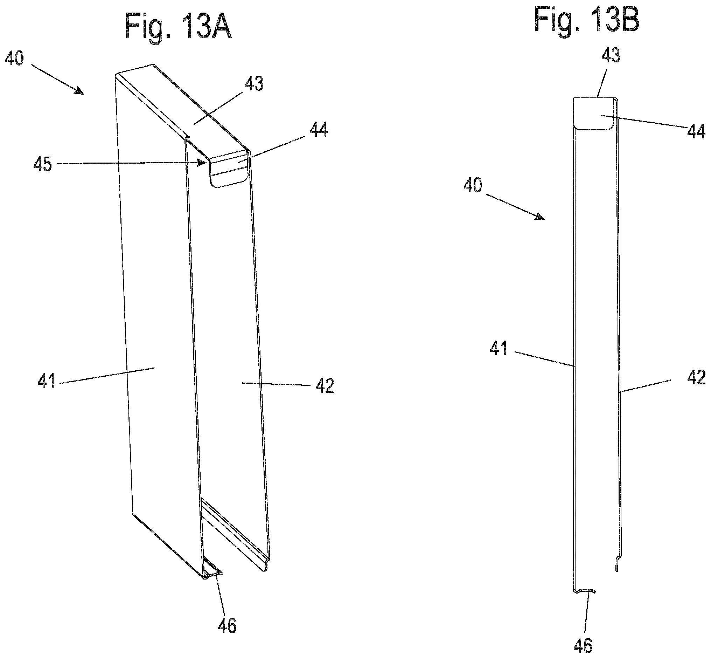

In den Figuren 13A und 13B ist die Abdeckkappe 40 im Detail gezeigt. Die Abdeckkappe 40 umfasst einen ersten Schenkel 41, der an dem inneren Wandelement 6 der Seitenzarge und einen äußeren Schenkel 42, der an dem äußeren Wandelement 7 der Seitenzarge 5 angeordnet wird. Die beiden Schenkel 41 und 42 sind über eine Oberkante 43 miteinander verbunden, in deren Verlängerung der abgewinkelte Steg 44 ausgebildet ist. Zwischen einem nach unten hervorstehenden Schenkel des Steges 44 und den Schenkeln 41 und 42 ist eine Aufnahme 45 zum Einfügen einer oberen Kante der Rückwand 3 oder 3' ausgebildet. An dem ersten Schenkel 41 ist an der Unterseite ein abgewinkelter Raststeg 46 ausgebildet, der zur Fixierung der Abdeckkappe 40 an dem Träger 8 eingesetzt wird.

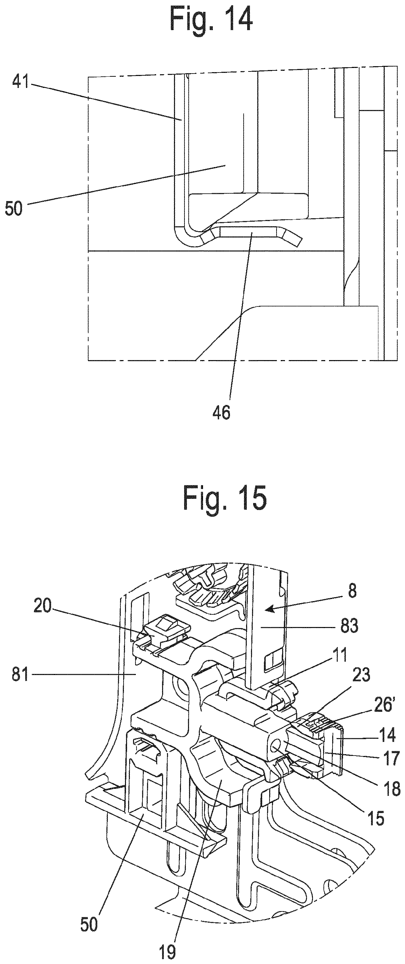

In Figur 14 ist der Bereich des abgewinkelten Raststeges 46 in einer montierten Position gezeigt. Es ist erkennbar, dass der abgewinkelte Raststeg 46 einen Kappenhalter 50 umgreift und dort rastend festgelegt ist.

Der Kappenhalter 50 an dem Träger 8 ist in Figur 15 ohne die Abdeckkappe 40 gezeigt. An dem Träger 8 ist der Kappenhalter 50 fixiert, der als stegförmiger Rastvorsprung ausgebildet ist und von dem Raststeg 46 in der montierten Position umgriffen ist.

An dem Träger 8 ist ferner erkennbar, dass das Blockierelement 23 an seinen Außenseiten keinen Vorsprung 26, sondern eine Riffelung 26' aufweist, so dass ein Verrasten in unterschiedlichen Einstecktiefen erfolgen kann. Das Blockierelement 23 kann somit an dem Rastmittel 11 in unterschiedlichen Einstecktiefen verrastet werden. Im Übrigen entspricht dieses Ausführungsbeispiel dem Ausführungsbeispiel der Figur 5.

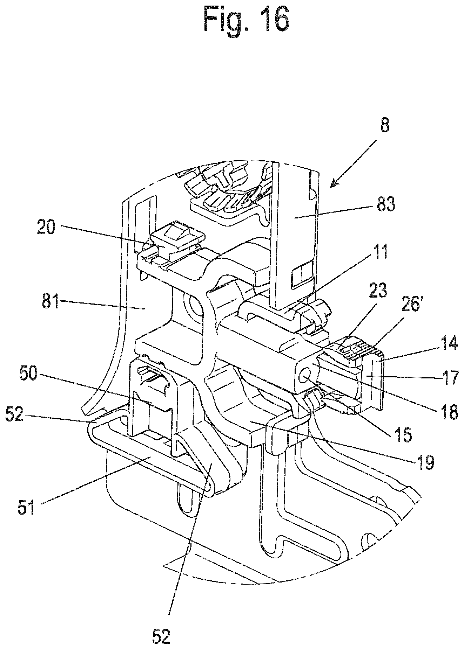

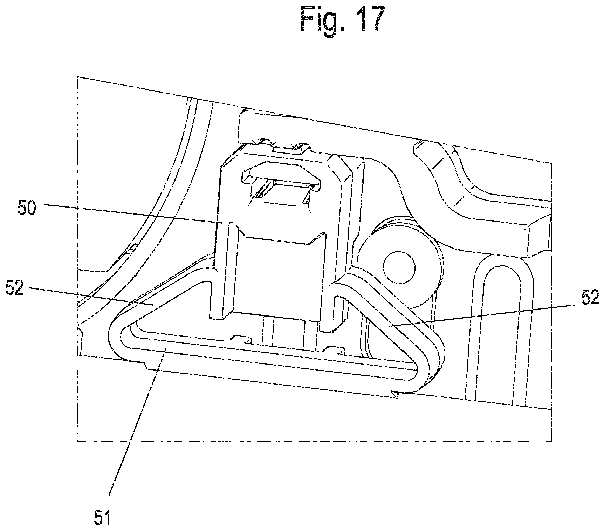

Die Figuren 16 und 17 zeigen einen modifizierten Rückwandverbinder mit einem Kappenhalter 50, der an einem unteren Ende einen Raststeg 51 aufweist, der über zwei integral ausgebildete Haltestege 52 federnd elastisch gelagert ist. Die Haltestege 52 sind dabei zu dem Raststeg 51 winklig angeordnet, insbesondere in einem Winkel zwischen 20° und 70°, vorzugweise 30° bis 60°, so dass die Abdeckkappe 40 an dem Raststeg 51 sicher verrastet werden kann.

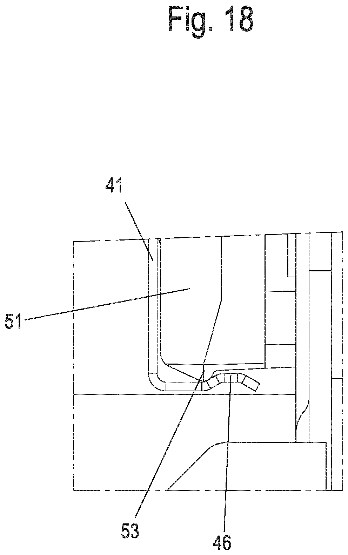

In Figur 18 ist die montierte Position gezeigt, in der der Raststeg 51 mit einem Rastvorsprung 53 von dem Raststeg 46 der Abdeckkappe 40 umgriffen ist, so dass die Abdeckkappe 40 gegen ein Anheben gesichert ist.

### Bezugszeichenliste

- 1: Schubkasten
- 2: Frontblende
- 3, 3': Rückwand
- 4: Boden
- 5: Seitenzarge
- 6: inneres Wandelement
- 7: äußeres Wandelement
- 8, 8': Träger
- 9: Abdeckung
- 10: Verbindungsteil
- 10': Verbindungsteil
- 11: Rastmittel
- 12,12`: Sicherungsteil
- 13: Steg
- 14: Anschlag
- 15: Schraubkanal
- 16: Mittelteil
- 17: Fläche
- 18: Anlagefläche
- 19: Arm
- 20: Steckelement
- 21: Steckelement
- 23: Blockierelement
- 24: Rastaufnahme
- 26: Vorsprung
- 26': Riffelung
- 30: Lasche
- 31: Aussparung
- 32: Stirnseite
- 33: Öffnung
- 34: Schraube
- 40: Abdeckkappe
- 41: Schenkel
- 42: Schenkel
- 43: Oberkante
- 44: Steg
- 45: Aufnahme
- 46: Raststeg
- 50: Kappenhalter
- 51: Raststeg
- 52: Haltesteg
- 53: Rastvorsprung
- 80: seitlicher Abschnitt
- 81: Lasche
- 82: Ausnehmung
- 83: Lasche
- 85: Lasche

## Patentansprüche

1. Rückwandverbinder für Schubkästen (1) mit einem an einer Seitenzarge (5) festlegbaren Träger (8) und einem an dem Träger (8) festgelegten Verbindungsteil (10), das Rastmittel (11), die an oder in einer Rastaufnahme an einer ersten Rückwand (3) verrastbar sind, und ein Sicherungsteil (12) aufweist, das in dem Verbindungsteil (10) linear verschiebbar gelagert ist und von einer hervorstehenden Position beabstandet zu einer Anlagefläche (18) des Verbindungsteils (10) in eine die Rastmittel (11) fixierende Sicherungsposition bewegbar ist, wobei in dem Verbindungsteil (10) mit der mindestens einen Anlagefläche (18) für eine zweite Rückwand (3') ein Schraubkanal (15) ausgebildet ist, **dadurch gekennzeichnet, dass** zur Anlage der zweiten Rückwand (3') an die Anlagefläche (18) mindestens eine Fläche (17) des Sicherungsteils (12) in der Sicherungsposition im Wesentlichen eine flächenbündige Ebene mit der Anlagefläche (18) des Verbindungsteils (10) ausbildet.

2. Rückwandverbinder nach Anspruch 1, **dadurch gekennzeichnet, dass** an dem Verbindungsteil (10) und/oder an dem Sicherungsteil (12) mindestens ein rückseitig hervorstehender Anschlag (14) vorgesehen ist, an dem eine Stirnseite (32) der zweiten plattenförmigen Rückwand (3') anlegbar ist.

3. Rückwandverbinder nach Anspruch 1 oder 2, **dadurch gekennzeichnet, dass** das Sicherungsteil (12) in der Sicherungsposition klemmend und/oder rastend gehalten ist.

4. Rückwandverbinder nach einem der vorhergehenden Ansprüche, **dadurch gekennzeichnet, dass** integral mit dem Sicherungsteil (12) mindestens ein Vorsprung (26), insbesondere Rasthaken oder eine Rastaufnahme ausgebildet ist, die mit einer Rastaufnahme (24) oder einem Rasthaken an dem Verbindungsteil (10) verrastbar ist.

5. Rückwandverbinder nach einem der vorhergehenden Ansprüche, **dadurch gekennzeichnet, dass** das Verbindungsteil (10) mit dem Träger (8), gesteckt, vertaumelt, verpresst oder verprägt ist.

6. Rückwandverbinder nach einem der vorhergehenden Ansprüche, **dadurch gekennzeichnet, dass** an dem Verbindungsteil (10) mindestens zwei Steckelemente (20, 21) vorgesehen sind, die an gegenüberliegenden Seiten des Verbindungsteils (10) angeordnet sind und auf einem der beiden Steckelemente (20, 21) mindestens ein weiteres Sicherungsteil (12') aufgesteckt ist.

7. Rückwandverbinder nach einem der vorhergehenden Ansprüche, **dadurch gekennzeichnet, dass** das Sicherungsteil (12) mindestens ein Blockierelement (23) aufweist und das Blockierelement (23) in der Sicherungsposition in eine schlitzförmige Aufnahme an dem Verbindungsteil (10) eingreift.

8. Rückwandverbinder nach einem der vorhergehenden Ansprüche, **dadurch gekennzeichnet, dass** der Steg (13) des Sicherungsteils (12) das Verbindungsteil (10) in der Sicherungsposition überragt, und in eine Ausnehmung (82) einer umgebogenen Lasche (85) des Trägers (8) eingreift.

9. Rückwandverbinder nach einem der vorhergehenden Ansprüche, **dadurch gekennzeichnet, dass** das Verbindungsteil (10) aus Kunststoff hergestellt ist.

10. Schubkasten (1) mit mindestens einer Seitenzarge (5), die über einen Rückwandverbinder nach einem der vorhergehenden Ansprüche mit der ersten oder der zweiten Rückwand (3, 3') verbunden ist.

11. Schubkasten nach Anspruch 10, **dadurch gekennzeichnet, dass** an der Seitenzarge (5) eine von oben montierbare Abdeckkappe (40) aufgesteckt ist, die eine obere Kante der ersten oder zweiten Rückwand (3, 3') übergreift.

12. Schubkasten nach Anspruch 10 oder 11, **dadurch gekennzeichnet, dass** die Abdeckkappe (40) klemmend oder rastend an einem an dem Träger (8) fixieren Kappenhalter (50) fixiert ist.

13. Schubkasten nach Anspruch 12, **dadurch gekennzeichnet, dass** der Kappenhalter (50) einen Raststeg (51) aufweist, der über mindestens einen Haltesteg (52) federnd elastisch gelagert ist und an dem die Abdecckappe (40) über einen Raststeg (46) verrastet ist.

## Claims

1. Rear wall connector for drawers (1) comprising a carrier (8) adapted to be fixed to a side frame (5) and a connection part (10) fixed to the carrier (8) and having latching means (11) which can be latched to or in a latching receptacle on a first rear wall (3), and a securing part (12) which is linearly displaceably mounted in the connection part (10) and is movable from a projecting position spaced from a bearing surface (18) of the connection part (10) into a securing position fixing the latching means (11), wherein a screw channel (15) is formed in the connection part (10) with the at least one bearing face (18) for a second rear wall (3'), **characterized in that** for abutment of the second rear (3') wall against the bearing face (18), at least one surface (17) of the securing part (12) in the securing position substantially forms a plane flush with the bearing face (18) of the connection part.

2. Rear wall connector according to claim 1, **characterized in that** at least one rearwardly projecting stop (14) is provided on the connection part (10) and/or on the securing part (12), against which stop (14) an end face (32) of the second plate-shaped rear wall (3') can be placed.

3. Rear wall connector according to claim 1 or 2, **characterized in that** the securing part (12) is held in the securing position in a clamping and/or latching manner.

4. Rear wall connector according to one of the preceding claims, **characterized in that** at least one projection (26), in particular a latching hook or a latching receptacle, is integrally formed with the securing part (12), which projection (26) can be latched to a latching receptacle (24) or a latching hook on the connection part (10).

5. Rear wall connector according to one of the preceding claims, **characterized in that** the connection part (10) is plugged, clinched, pressed or stamped to the carrier (8).

6. Rear wall connector according to one of the preceding claims, **characterized in that** at least two plug-in elements (20, 21) are provided on the connection part (10), which are arranged on opposite sides of the connection part (10), and at least one further securing part (12') is plugged onto one of the two plug-in elements (20, 21).

7. Rear wall connector according to one of the preceding claims, **characterized in that** the securing part (12) comprises at least one blocking element (23) and the blocking element (23) engages in the securing position in a slot-shaped receptacle on the connection part (10).

8. Rear wall connector according to one of the preceding claims, **characterized in that** the web (13) of the securing part (12) projects beyond the connection part (10) in the securing position, and engages in a recess (82) of a bent-over tab (85) of the carrier (8).

9. Rear wall connector according to one of the preceding claims, **characterized in that** the connection part (10) is made of plastic.

10. Drawer (1) having at least one side frame (5) connected to the first or the second rear wall (3, 3') via a rear wall connector according to one of the preceding claims.

11. Drawer according to claim 10, **characterized in that** a cover cap (40), which can be mounted from above and engages over an upper edge of the first or second rear wall (3, 3'), is plugged onto the side frame (5).

12. Drawer according to claim 10 or 11, **characterized in that** the cover cap (40) is fixed in a clamping or latching manner to a cap holder (50) fixed to the carrier (8).

13. Drawer according to claim 12, **characterized in that** the cap holder (50) has a latching web (51) which is resiliently mounted via at least one retaining web (52) and onto which the cover cap (40) is latched via a latching web (46).

## Revendications

1. Raccord de paroi arrière de tiroir (1) comportant un support (8) qui se fixe à un châssis latéral (5) et une pièce de liaison (10) se fixant au support (8) et qui comporte des moyens d'accrochage (11) s'accrochant sur ou dans un logement d'accrochage d'une première paroi arrière (3) et une pièce de sécurité (12) logée en coulissement linéaire dans la pièce de liaison (10) et mobile à partir d'une position en relief par rapport à une surface d'appui (18) de la pièce de liaison (10) vers une position de sécurité fixant le moyen d'accrochage (11),
- la pièce de liaison (10) formant un canal de vis (15) avec au moins une surface d'appui (18) pour la seconde paroi arrière (3'),
raccord **caractérisé en ce que**
pour l'appui de la seconde paroi arrière (3') contre la surface d'appui (18) au moins une surface (17) de la pièce de sécurité (12) est réalisée dans la position de sécurité, essentiellement dans un plan à niveau de surface avec la surface d'appui (18) de la pièce de liaison (10).

2. Raccord de paroi arrière selon la revendication 1,
**caractérisé en ce que**
la pièce de liaison (10) et/ou sur la pièce de sécurité (12), ont au moins une butée (14) en relief du côté arrière, butée contre laquelle s'applique une face frontale (32) de la seconde paroi arrière (3') en forme de plaque.

3. Raccord de paroi arrière selon la revendication 1 ou 2,
**caractérisé en ce que**
la pièce de sécurité (12) est tenue serrée et/ou accrochée dans la position de sécurité.

4. Raccord de paroi arrière selon l'une des revendications précédentes,
**caractérisé en ce que**
au moins un relief (26), notamment des crochets d'accrochage ou un logement d'accrochage sont réalisés intégralement avec la pièce de sécurité (12), et qu'ils s'accrochent par un logement d'accrochage (24) ou un crochet d'accrochage à la pièce de liaison (10).

5. Raccord de paroi arrière selon l'une des revendications précédentes,
**caractérisé en ce que**
la pièce de liaison (10) est enfoncée, matée, pressée ou encastrée au support (8).

6. Raccord de paroi arrière selon l'une des revendications précédentes,
**caractérisé en ce que**
la pièce de liaison (10) a au moins deux éléments d'entretoise (20, 21) sur les côtés opposés de la pièce de liaison (10) et ils sont emmanchés sur l'un des deux éléments d'enfichage (20, 21) d'au moins une autre pièce de sécurité (12').

7. Raccord de paroi arrière selon l'une des revendications précédentes,
**caractérisé en ce que**
la pièce de sécurité (12) comporte au moins un élément de blocage (23) et cet élément de blocage (23), en position de sécurité, vient prendre dans un évidement en forme de fente de la pièce de liaison (10).

8. Raccord de paroi arrière selon l'une des revendications précédentes,
**caractérisé en ce que**
l'entretoise (13) de la pièce de sécurité (12) dépasse de la pièce de sécurité (10) en position de sécurité et prend dans un évidement (82) d'une patte (85) recourbée du support (8).

9. Raccord de paroi arrière selon l'une des revendications précédentes,
**caractérisé en ce que**
la pièce de liaison (10) est en matière plastique.

10. Tiroir (1) comportant au moins un châssis latéral (5) relié par un raccord de paroi arrière selon l'une des revendications précédentes à une première ou une seconde paroi arrière (3, 3').

11. Tiroir selon la revendication 10,
**caractérisé en ce que**
un cache (40) qui se monte par le haut sur le châssis latéral (5), ce cache passant sur l'arête supérieure de la première ou de la seconde paroi arrière (3, 3').

12. Raccord de paroi arrière selon la revendication 10 ou 11,
**caractérisé en ce que**
le cache (40) est fixé par serrage ou accrochage à un support de cache (50) fixé au support (8).

13. Raccord de paroi arrière selon la revendication 12,
**caractérisé en ce que**
le support de cache (50) comporte une entretoise d'accrochage (51) qui est montée de manière élastique par au moins une entretoise de maintien (52) et à laquelle s'accroche le cache (40) par une entretoise d'accrochage (46).
